# EUROPÄISCHE PATENTSCHRIFT

(11) **EP 0 992 524 B1**
(45) Veröffentlichungstag und Bekanntmachung des Hinweises auf die Patenterteilung: **18.02.2004**
(21) Anmeldenummer: 99118086.0
(22) Anmeldetag: 24.09.1999
(51) Int. Cl.: C08G 65/28, C07F 5/00, B01J 31/12, B01J 31/14

(54) **Verfahren zur Herstellung von Polyetherpolyolen**
Process for preparing polyether polyols
Procédé de préparation de polyétherpolyols

(30) Priorität: 07.10.1998 DE 19846095
(43) Veröffentlichungstag der Anmeldung: 12.04.2000
(73) Patentinhaber: BAYER AG, 51368 Leverkusen (DE)
(72) Erfinder: Denninger, Uwe, Dr., 51469 Bergisch Gladbach (DE); Hofmann, Jörg, Dr., 47829 Krefeld (DE); Gupta, Pramod, Dr., 50181 Bedburg (DE)

(56) Entgegenhaltungen:
- EP-A- 0 212 820
- EP-A- 0 855 417
- DE-A- 1 645 091

## Beschreibung

Die vorliegende Erfindung betrifft ein Verfahren zur Herstellung von Polyetherpolyolen durch Umsetzung von Alkylenoxiden und aktive Wasserstoffe aufweisende Verbindungen in Gegenwart bestimmter lewis-acider Metallverbindungen als Katalysatoren, neue Bis(perfluoralkylsulfonsäure)-Verbindungen der 13. Gruppe des Periodensystems der Elemente und ein Verfahren zu deren Herstellung und deren Verwendung als Katalysatoren für die ringöffnende Polymerisation von cyclischen Ethern.

Polyetherpolyole sind erhältlich durch Polyaddition von Alkylenoxiden, wie z.B. Ethylenoxid, Propylenoxid, Butylenoxid, an aktive Wasserstoffatome aufweisende Verbindungen, wie Alkohole, Amine, Säureamide, Phenole, und werden unter anderem zur Herstellung von Polyurethankunststoffen, Tensiden und Schmierstoffen verwendet. Die Polyaddition von Epoxiden an Startverbindungen erfolgt technisch üblicherweise durch Alkalikatalyse. Die überwiegend angewandten Alkali-Katalysatoren sind Alkalihydroxide. Nachteilig bei der durch Alkalihydroxide katalysierten Polyetherpolyol-Herstellung sind die langen Reaktionszeiten (> 5 Stunden) und die aufwendige Produktaufarbeitung bedingt durch Neutralisation des alkalischen Polymerisates (siehe z.B. US 4 129 718, US 4 482 750, US 4 029 879, JP 73 26 391, Encyclopedia of Polymer Science & Eng., Vol. 6, New York 1986, Seite 273 - 307). Problematisch ist außerdem die als Nebenreaktion ablaufende basenkatalysierte Umlagerung von Epoxiden, beispielsweise Propylenoxid, zu Allyl- bzw. Propenylalkoholen, die zu monofunktionellen Polyethern mit endständiger Doppelbindung führt.

Neben der basischen Katalyse ist für die Polyaddition von Alkylenoxiden an Startverbindungen seit langem auch die saure Katalyse, insbesondere mit Lewis-Säuren, wie z.B. Bortrifluorid, bekannt. Die saure Katalyse für die Polyetherpolyol-Herstellung hat den Nachteil, daß sie Nebenreaktionen (z.B. die Bildung flüchtiger, niedermolekularer Ringether) in erhöhtem Maße begünstigt, daß Hydroxylgruppen durch Säureanionen substituiert sind, und daß die Molmassenverteilung der Polyole breiter ist als bei den durch Basenkatalyse hergestellten Produkten. Nachteilig ist außerdem die schwere Abtrennbarkeit (lewis-) saurer Katalysatoren sowie deren Hydrolyseempfindlichkeit, was den Einsatz spezieller Werkstoffe (z.B. Emaile) in den verwendeten Reaktionsapparaturen notwendig macht. Darüber hinaus gestaltet sich die Reaktionskontrolle aufgrund der hohen Katalyseaktivität schwierig.

US-Patent 4 543 430 beschreibt ein Verfahren zur Monoalkoxylierung von hydroxylierten Verbindungen in Gegenwart von Trifluormethansulfonsäuresalzen. Das Alkohol/Epoxid-Verhältnis muß immer ≥2 sein, um nur das Monoaddukt zu bilden.

Ein Verfahren zur Herstellung von Polyethern durch Reaktion von Diepoxiden mit Dihydroxiden in Anwesenheit von Metalltriflatsalzen beschreibt EP 493 916. Das Verfahren erfordert eine Desaktivierung des Katalysators.

Zur Erhöhung der Selektivität wird in EP-A 569 331 ein Verfahren zur Herstellung von Anlagerungsprodukten durch Umsetzung eines Alkohols mit einer Epoxidverbindung vorgeschlagen, bei dem als Katalysator eine komplexe Metallverbindung eines Metalls der Haupt- oder Nebengruppen des Periodensystems der Elemente mit Sulfonatresten einer perfluorhaltigen Alkansulfonsäure sowie mindestens einem schwach gebundenen, neutralen, uni- oder multidentaten Liganden verwendet wird. Besonders geeignet für dieses Verfahren ist eine Metallkomplexverbindung der Formel La(CH₃CN)ₓ(H₂O)_{Y}(CF₃SO₃)₃ (siehe Anspruch 12 in EP-A 569 331). Nachteil dieser Metallkomplexkatalysatoren für den Prozeß der Polyetherpolyolherstellung ist die schwierige Abtrennung und vollständige Rückgewinnung des komplexen Systems aus Metallperfluoralkylsulfonat und Liganden aus dem Polyol-Reaktionsgemisch sowie die geringe katalytische Aktivität dieser Metallkomplexverbindungen, so daß für den Prozeß der Polyether-Herstellung große Katalysatormengen eingesetzt werden müssen. Die Polyether-Herstellung mit diesen Metallkomplexverbindungen wäre deshalb sehr unwirtschaftlich.

In den US-Patenten 4 721 816 und 4 721 817 wird ein Verfahren zur Herstellung von Alkanol-Alkoxylat-Produkten in Gegenwart von Katalysatoren, die durch die Reaktion einer oder mehrerer Aluminiumverbindungen und einer schwefel- oder phosphorhaltigen Säure erhalten werden. Dieses Verfahren ist dadurch charakterisiert, daß korrosive Säuren mit den oben beschriebenen Nachteilen, verwendet werden. Weiterhin stellt ein Zweikomponentensystem, wie das beschriebene, hohe Ansprüche an die exakte Dosierung beider Komponenten. In Vergleichsbeispielen wird beschrieben, daß die Aluminiumkomponente alleine nur sehr geringe Aktivität zeigt.

Überraschend wurde nun gefunden, daß bestimmte Metallverbindungen ohne gleichzeitige Anwesenheit von Liganden, Beschleunigern oder Cokatalysatoren mit hoher Selektivität und katalytischer Aktivität die Polyaddition von Epoxiden an Startverbindungen mit aktiven Wasserstoffatomen ermöglichen. Diese Verbindungen in katalytisch aktiver Menge zeigen (auch nach Hydrolyse) neutrales bis leicht saures Verhalten, d. h. pH-Werte ≤ 7,0. Dies hat zur Folge, daß auf eine Neutralisierung des Katalysators am Ende der Reaktion verzichtet werden kann.

Ein geeignetes Verfahren zur Herstellung von Polyetherpolyolen aus Alkylenoxiden und aktive Wasserstoffatome enthaltende Startverbindungen, ist dadurch gekennzeichnet, daß das Verfahren in Gegenwart von Metallverbindungen der Formel I durchgeführt wird

(X)ₙM(E-R-E'ₗ)ₘ (I)

worin
- X: ein Halogenid, Alkoxid, Aryloxid, Thiolat, Sulfinat, Sulfonat, Sulfat, Amid, Phosphinat, Phosphonat, Phosphat oder Carboxylat ist
- M: ein Metall aus der 13. Gruppe des Periodensystems der Elemente ist,
- E: Sauerstoff, Schwefel, Selen, NR¹ oder PR¹ ist,
worin
R¹ gleich H oder ein C₁-C₂₀-Kohlenwasserstoffrest wie Alkyl, Aryl ist,
- R: eine C₁-C₃₀-Kohlenwasserstoffbrücke wie eine Alkylen-, Arylen- oder Aralkylenbrücke ist, wobei R mit R¹ einen Ring bilden kann,
- E': H, ein C₁-C₁₀-Kohlenwasserstoffrest wie Alkyl, Aryl, OR², NR²R³, Halogen, SR² oder PR²R³ ist,
worin
R² und R³ gleich oder verschieden H oder ein C₁-C₁₀-Kohlenwasserstoffrest wie Alkyl, Aryl, Aralkyl sind, wobei R² mit R³ oder R und/oder R³ mit R oder R² einen oder mehrere Ringe bilden kann und zwei oder mehrere ERE'-Einheiten einen oder mehrere Ringe bilden können,
- n: eine ganze Zahl von 0 bis 3 ist,
- m: eine ganze Zahl von 1 bis 3 ist und
- I: eine ganze Zahl von 0 bis 10 ist.

Das Verfahren wird im allgemeinen bei Temperaturen von 40 bis 200°C und bei Gesamt-Drücken von 0 bis 20 bar, gegebenenfalls in Gegenwart eines inerten, organischen Lösungsmittels durchgeführt.

Als Alkylenoxide kommen z.B. C₁-C₂₀-Alkylenoxide, bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen. Näheres ist "Ullmanns Encyclopädie der industriellen Chemie", englischsprachige Ausgabe, 1992, Band A21, Seiten 670-671, zu entnehmen.

Als Starter werden aktive Wasserstoffatome aufweisende Verbindungen, bevorzugt mit Molekulargewichten von 18 bis 400 und 1 bis 8 Hydroxyl-, Thiol- und/oder Aminogruppen verwendet. Beispielhaft seien genannt: Ethylenglykol, Diethylenglykol, 1,2-Propylenglykol, 1,4-Butandiol, Hexamethylenglykol, Bisphenol A, Trimethylolpropan, Glyzerin, Pentaerythrit, Sorbit, Rohrzucker, abgebaute Stärke, Wasser, Methylamin, Ethylamin, Propylamin, Butylamin, Anilin, Benzylamin, o- und p-Toluidin, α,β-Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m- und p-Phenylendiamin, 2,4-, 2,6-Toluylendiamin, 2,2'-, 2,4- und 4,4'-Diaminodiphenylmethan und Diethylendiamin.

Als X eignen sich Halogenide, Alkoxide, Aryloxide, Aralkyloxide, Thiolate, Sulfinate, Sulfonate, Amide, Carbonsäuren, Phosphonate oder Phosphate.
Steht X für ein Halogenid so sind beispielsweise F, Cl , Br und I geeignet.
Bedeutet X ein Alkoxid, so handelt es sich dabei z.B. um gesättigte und ungesättigte aliphatische Alkohole, wie beispielsweise Methanol, Ethanol, n-Propanol, i-Propanol, n-Butanol, s-Butanol, t-Butanol, Nonanol, Decanol, Dodecanol, Hexadecanol, Cyclohexanol, Menthol oder Neomenthol.
Bedeutet X ein Aryloxid, so handelt es sich hierbei z.B. um substituierte Phenole, Naphthole, Anthracenole oder Phenanthrenole, wie zum Beispiel Phenol, o-, m- oder p-Methylphenol, 2,4,6- oder 3,4,5-Trimethyphenol, 2,6-Di-tert-Butylphenol, 2,6-Ditert-Butyl-4-Methylphenol, α- oder β-Naphthol, 1- oder 2-Anthrol oder 9-Hydroxyphenanthren.
Bedeutet X ein Aralkoxid, so handelt es sich dabei zum Beispiel um Benzylalkohol, 2- oder 3-Methylbenzylalkohol oder 1-Phenylethanol.
Bedeutet X Thiolat, so handelt es sich z.B. um Thiole, wie Methylthiol, Ethylthiol, n-Propylthiol, i-Propylthiol, n-Butylthiol, s-Butylthiol, t-Butylthiol, Nonylthiol,
Decylthiol, Dodecylthiol, Hexadecylthiol, Cyclohexylthiol, Menthylthiol, Neomenthylthiol, Thiophenol, o-, m- oder p-Methylthiophenol, 2,4,6- oder 3,4,5-Trimethythiophenol, α- oder β-Thionaphthol, 1- oder 2-Thioanthrol, Benzylthiol, 2- oder 3-Methylbenzylthiol oder 1-Phenylethylthiol.
Bedeutet X ein Sulfinat, so handelt es sich dabei z.B. um substituierte Alkyl- oder Arylsulfinsäuren, wie Methylsulfinat, Ethylsulfinat, Trifluormethylsulfinat oder Phenylsulfinat.
Bedeutet X ein Sulfonat, so handelt es sich dabei z.B. um substituierte Alkyl- oder Arylsulfonsäuren, wie zum Beispiel Methansulfonsäure, Ethansulfonsäure, Propansulfonsäure, Butansulfonsäure, Pentansulfonsäure, Hexansulfonsäure, Dodecansulfonsäure, Hexadecansulfonsäure, Cyclohexylsulfonsäure, Trifluormethansulfonsäure, Tetrafluorethansulfonsäure, Pentafluorethansulfonsäure, Heptafluorpropansulfonsäure, Heptadecanfluoroktansulfonsäure, Benzolsolfonsäure, Toluolsulfonsäure oder Styrolsulfonsäure.
Bedeutet X ein Sulfat, so handelt es sich hier z.B. um substituierte Monoalkyl- oder-arylschwefelsäureestern, zum Beispiel Methylschwefelsäure, Ethylschwefelsäure, Trifluormethylschwefelsäure oder Phenylschwefelsäure.
Bedeutet X ein Amid, so handelt es sich dabei beispielsweise um Dimethylamid, Diethylamid, Dipropylamid, Methylethylamid, Methylpropylamid, Diisopropylamid, Di-tert-Butylamid, Methylphenylamid, Diphenylamid oder Methylnaphthylamid.
Bedeutet X ein Phosphinat, so handelt es sich hier um Anionen von wahlweise substituierten Alkyl- oder Arylphosphinsäuren, zum Beispiel Methylphosphinsäure, Ethylphosphinsäure, Trifluormethylphosphinsäure oder Phenylphosphinsäure.
Bedeutet X ein Phosphonat, so handelt es sich hier z.B. um substituierte Ester der Phosphonsäure, zum Beispiel Methylphosphonsäure, Ethylphosphonsäure, Trifluormethylphosphonsäure oder Phenylphosphonsäure.
Bedeutet X ein Phosphat, so handelt es sich hier um Diester von wahlweise substituierten Phosphorsäuren, zum Beispiel Dimethylphosphorsäure, Diethylphosphorsäure, Bis(trifluormethyl)phosphorsäure oder Diphenylphosphorsäure.
Bedeutet X ein Carboxylat, so handelt es sich hierbei z.B. um substituierte gesättigte oder ungesättigte aliphatische Carbonsäuren, wie Essigsäure, Trifluoressigsäure, Propionsäure, Buttersäure, Capronsäure, Laurinsäure, Palmitinsäure, Acrylsäure, Methacrylsäure, Propiolsäure, Crotonsäure, Sorbinsäure oder Ölsäure, von cycloaliphatischen Carbonsäuren, wie Cyclohexancarbonsäure, von aromatischen Carbonsäuren, wie Benzoesäure, Naphthoesäure oder Tolylsäure, oder von araliphatischen Carbonsäuren, wie Hydrotropasäure, Atropasäure oder Zimtsäure.

Als M eignen sich die Elemente der 13. Gruppe des Periodensystems der Elemente, wie zum Beispiel Bor, Aluminium, Gallium, Indium oder Thallium.

Als E eignen sich O, S, Se, NR¹ oder PR¹, wobei R¹ gleich H oder C₁-C₂₀-Kohlenwasserstoffrest wie Methyl, Ethyl, t-Butyl oder Phenyl ist.

Als E' eignen sich H-, Alkyl-, Aryl-, Halogen, R²O-, R²C(O)O-, R²S-, R²R³N-, R²C(O)N(R³)-, R²R³P-, O₂N-, H(O)C-, R²(O)C-, R²O(O)C-, NC-, R²S(O)₂- oder R²OS(O)₂-.

R² und/oder R³ sind gleich oder verschieden und können aus der Gruppe H, Alkyl, Aryl oder Aralkyl gewählt werden. R² und/oder R³ können mit R und/oder miteinander Ringe bilden.

Als R eignen sich Alkylen-, Arylen- und Aralkylenbrücken.

Unter einer Alkylenbrücke versteht man dabei z.B. Struktureinheiten, die der Formel (II) 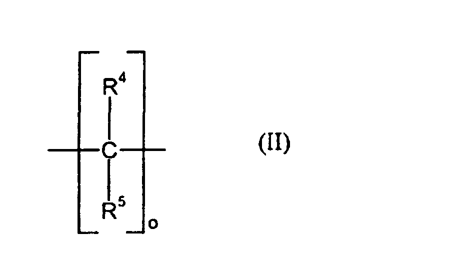 genügen.

Dabei sind
- R⁴ und/oder R⁵: gleich oder verschieden und können aus der Gruppe H, Alkyl, Aryl, Halogenid, Alkoxid oder Aryloxid gewählt werden. R⁴ und/ oder R⁵ können mit R¹, R², R³, R⁴ und/oder R⁵ Ringe bilden. R⁴ und/oder R⁵ kann auch mit R⁴ und/oder R⁵von benachbarten C-Atomen verknüpft sein, so daß sich zwischen den beiden C-Atomen Doppel- oder Dreifachbindungen befinden.
- o: kann ganzzahlige Werte zwischen 1 und 10 annehmen.

Unter einer Arylen- oder Aralkylenbrücke versteht man z.B. Struktureinheiten, die den folgenden Formeln III bis X 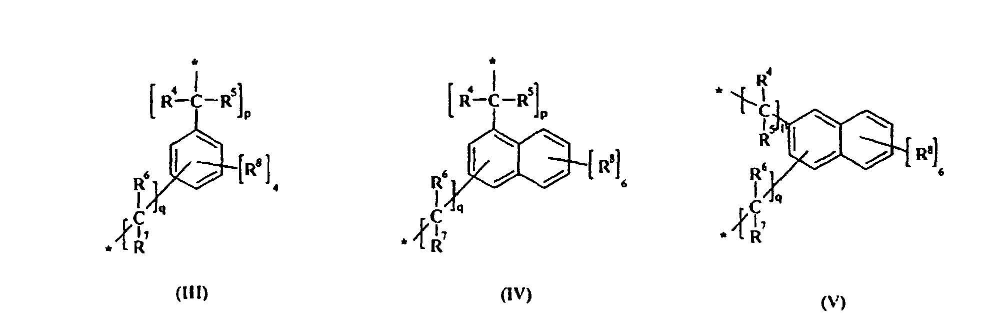 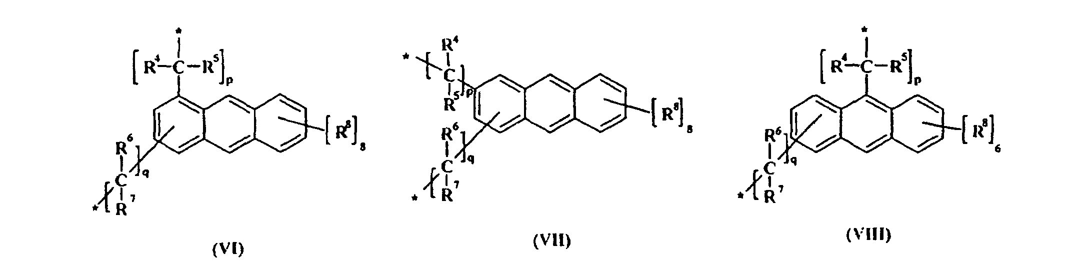 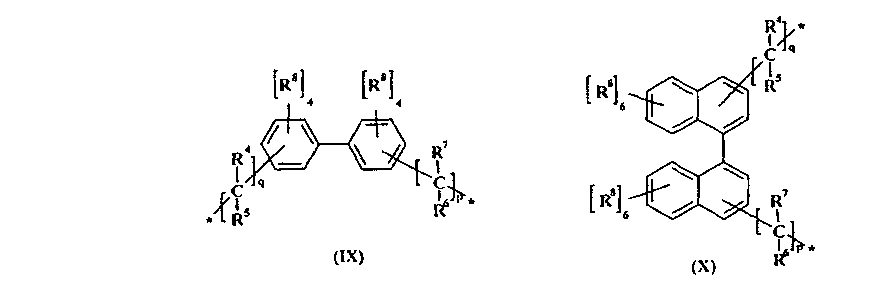 genügen.

Die mit * gekennzeichneten Positionen markieren die Positionen, an denen sich die Substituenten E und E' befinden. Dabei können E und E'auch vertauscht werden.

Für Formel III gilt, daß Verbrückung in o-, m- oder in p-Stellung am Benzolkern erfolgen kann.
Für formel IV gilt, daß Verbrückung in 1,2-, 1,3-, 1,4-, 1,5-, 1,6-, 1,7- oder 1,8-Position am Naphthalingerüst erfolgen kann.
Für Formel V gilt, daß Verbrückung in 2,3-, 2,4-, 2,5-, 2,6-, 2,7- oder 2,8-Position am Naphthalingerüst erfolgen kann.

Für Formel VI gilt, daß Verbrückung in 1,2-, 1,3-, 1,4-, 1,5-, 1,6-, 1,7-, 1,8-, 1,9-oder 1,10- Position am Anthracengerüst erfolgen kann. Für Formel VII gilt, daß Verbrückung in 2,3-, 2,4-, 2,5-, 2,6-, 2,7-, 2,8-, 2,9- oder 2,10- Position am Anthracengerüst erfolgen kann.
Für Formel VIII gilt, daß Verbrückung in 1,9-, 2,9-, 3,9-, 4,9- oder 9,10- Position am Anthracengerüst erfolgen kann.
Für Formel IX gilt, daß Verbrückung in 2,2'-, 2,3'-, 2,4'-, 2,5'-, 2,6'-, 3,3'-, 3,4', 3,5'-, 3,6'-, 4,4'-, 4,5'-, 4,6'-, 5,5'-, 5,6'oder 6,6'-Position am Biphenylgerüst erfolgen kann.
Für Formel X gilt, daß Verbrückung in 2,2'-, 2,3'-, 2,4'-, 2,5'-, 2,6'-, 2,7'-, 2,8'-, 3,3'-, 3,4', 3,5'-, 3,6'-, 3,7'-, 3,8'-, 4,4'-, 4,5'-, 4,6'-, 4,7'-, 4,8'-, 5,5'-, 5,6', 5,7'-, 5,8'-, 6,6'-, 6,7'-, 6,8'-, 7,7'-, 7,8'- oder 8,8'-Position am Binaphthylgerüst erfolgen kann.

R⁶ und/oder R⁷ sind gleich oder verschieden und können aus der Gruppe H, Alkyl, Aryl, Halogenid, Alkoxid oder Aryloxid gewählt werden. R⁶ und/ oder R⁷ können mit R⁶ und/oder R⁷ Ringe bilden. Dabei sind Halogenide, Alkoxide und Aryloxide wie oben definiert.

R⁴ und/ oder R⁵ können mit R¹, R², R³, R⁴ und/oder R⁵ Ringe bilden. R⁶ und/oder R⁷ kann auch mit R⁶ und/oder R⁷ von benachbarten C-Atomen verknüpft sein, daß sich zwischen den beiden C-Atomen Doppel- oder Dreifachbindungen bilden können.

R⁸ können gleich oder verschieden sein und können H, Alkyl-, Aryl-, Aralkyl-, Halogen, R²O-, R²C(O)O-, R²S-, R²R³N-, R²C(O)N(R³)-, R²R³P-, O₂N-, H(O)C-, R²(O)C-, R²O(O)C-, NC-, R²S(O)₂- oder R²OS(O)₂-Gruppen sein.

R⁴, R⁵, R⁶ und/oder R⁷ können gleich oder verschieden sein und können aus der Gruppe H, Alkyl, Aryl, Halogenid, Alkoxid oder Aryloxid gewählt werden. R⁴, R⁵, R⁶ und/oder R⁷ können mit R¹, R², R³ und/oder mit sich selbst Ringe bilden. Dabei sind Halogenide, Alkoxide und Aryloxide wie oben definiert. p und q sind gleich oder verschieden ganze Zahlen von 0 bis 8, wobei es sich bei p=q=0 um eine Arylenbrücke handelt, während man bei p+q≥1 von einer Aralkylenbrücke spricht.

Beispiele für die Struktureinheit E-R-E' sind Methanolat, Ethanolat, i-Propanolat, Benzylalkoholat, 2-Methoxyethanolat, 2-(2-Piperidyl)ethanolat, 2,2,2-Trifluorethanolat, 1,1,1,3,3,3-Hexafluorisopropanolat, 2-(Methylmercapto)ethanolat, 3-Dimethylphosphanyl-phenolat, 2-Dimethylamino-cyclohexanolat, Ethylthiolat, Benzylthiolat, 2-Methoxy-ethanthiolat, Methylselenat, N-Methylanilid, 6-Methoxy-2,3-dihydroindolat, Phenolat, Quinolin-7-olat, 3-Methoxyphenolat, 3,5-Methoxyphenolat, 3-Methyl-4-Dimethylaminophenolat, 3-Dimethylaminophenolat, 2-Fluorphenolat, Pentafluorphenolat, 3-tert-Butylphenolat, 2,6-Di-tert-Butyl-4-methylphenolat, 3-Methylmercaptophenolat, 3,5-Trifluormethylphenolat, 3,5-Dimethoxyphenolat, 2-(2-Pyridyl)phenolat, 6-Methoxyindolat, 2'-Methoxy-biphenyl-2-olat, 2'-Methoxy-1,1'binaphthalenyl-2-olat oder 8-Methoxy-2-naphtholat.

Zwei ERE'-Einheiten können auch miteinander Ringe bilden, wie 6,6'-Di-tert-butyl-4,4'-dimethyl-2,2'-methandiyl-di-phenolat oder 6,6'-Di-tert-butyl-4,4'-dimethyl-2,2'sulfandiyl-di-phenolat.

Bevorzugt verwendet man in dem Verfahren Verbindungen der Formel I, bei denen
- X: ein Halogenid, Alkoxid, Aryloxid oder Sulfonat, bevorzugt Sulfonat und bevorzugt Perfluoralkylsulfonat ist,
- M: Bor, Aluminium oder Gallium und bevorzugt Aluminium ist,
- E: O, S, NR¹ und bevorzugt O ist,
- R: Arylen, Alkylen und bevorzugt Phenylen ist,
- E': H, R²O-, R²S-, R²R³N-, R²R³P- oder NC- und bevorzugt H, R²O-, R²S-, R²R³N- oder R²R³P-Gruppen sind.

Bei den Metallverbindungen der Formel I handelt es sich um teils neue und teils bekannte Verbindungen. Die bekannten Verbindungen können wie in der Literatur (siehe z.B. J. Indian Chem. Soc. 62 (1985) 494) beschrieben synthetisiert werden. Die neuen Verbindungen weisen die Formel XI auf und können durch Umsetzungen von Verbindungen der Formel XII mit H(E-R-E'₁) und R^{F}SO₃H erhalten werden, oder durch Umsetzungen von Verbindungen der Formel XIII mit R^{F}SO₃H.

Die durch die Verbindungen der Formel I katalysierte Polyaddition erfolgt im allgemeinen im Temperaturbereich von 40 bis 200°C, bevorzugt im Bereich von 40 bis 160°C, besonders bevorzugt von 50 bis 150°C, bei Gesamt-Drücken von 0 bis 20 bar. Der Prozeß kann in Substanz oder in einem inerten organischen Lösungsmittel, wie z.B. Cyclohexan, Toluol, Xylol, Diethylether, Dimethoxyethan und/oder chlorierten Kohlenwasserstoffen, wie Methylenchlorid, Chloroform oder 1,2-Dichlorpropan, durchgeführt werden. Die Menge an Lösungsmittel beträgt üblicherweise ca. 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,00005 Gew.-% bis 10 Gew.-%, bevorzugt im Bereich von 0,0001 Gew.-% bis 5 Gew.-%, bezogen auf die Menge des herzustellenden Polyetherpolyols.

Die Reaktionszeiten für die Polyaddition liegen im Bereich von wenigen Minuten bis zu mehreren Tagen, bevorzugt von wenigen Minuten bis zu mehreren Stunden.

Die Molekulargewichte der nach dem erfindungsgemäßen Verfahren hergestellten Polyether liegen im Bereich von 100 bis 20.000 g/Mol, bevorzugt im Bereich von 200 bis 15.000 g/Mol. Aufgrund der Stabilität der als Katalysator eingesetzten Verbindungen der Formel I, insbesondere der Triflate, gegenüber Verbindungen mit aktiven Wasserstoffatomen (z.B. Wasser, Alkohole) müssen in den verwendeten Reaktionsapparaturen keine speziellen Werkstoffe (z.B. Emaile) eingesetzt werden.

Der Polyadditionsprozeß kann kontinuierlich, in einem Batch- oder im Semi-Batch-Verfahren durchgeführt werden.

Das Verfahren kann im allgemeinen wie folgt durchgeführt werden:

Zur Herstellung von Polyetherpolyolen durch Polyaddition von Alkylenoxiden an Startverbindungen durch Katalyse mit lewis-sauren Katalysatoren der Formel I wurden jeweils Katalysator, Startverbindung (z.B. Propylenglykol oder Trimethylolpropan) und gegebenenfalls Lösungsmittel in einem Reaktionsgefäß vorgelegt und dann bei Gesamt-Drücken von 0 - 20 bar auf die gewünschte Reaktionstemperatur (bevorzugt 50 bis 150°C) gebracht. Anschließend wurde die gewünschte Menge Alkylenoxid (bevorzugt Propylenoxid) mittels einer gesteuerten Membranpumpe kontinuierlich in das Reaktionsgefäß dosiert. Nach vollständiger Epoxiddosierung und Nachreaktionszeit bei vorgegebener Reaktionstemperatur wurden flüchtige Anteile bei 90°C 30 min unter vermindertem Druck (1 mbar) abdestilliert und anschließend auf Raumtemperatur abgekühlt. Die erhaltenen Polyetherpolyole sind farblose, viskose Flüssigkeiten, die durch Ermittlung der OH-Zahlen und der Viskositäten charakterisiert wurden.

Das Verfahren zeichnet sich dadurch aus, daß im technisch interessanten Temperaturbereich farblose Polyetherpolyole erhalten werden. Besonderer Vorteil des Verfahrens ist, daß aufgrund der sehr hohen Aktivitäten die Katalysatoren in so geringen Konzentrationen (50 ppm oder weniger, bezogen auf die Menge des herzustellenden Polyetherpolyols, siehe Beispiele 1 bis 7) eingesetzt werden können, daß auf eine Katalysatorabtrennung aus dem fertigen Polyetherpolyol verzichtet werden kann.

Die vorliegende Erfindung betrifft neue Bis(perfluoralkylsulfonsäure)-Verbindungen der 13. Gruppe des Periodensystems der Elemente.

Die neuen Verbindungen entsprechen der Formel XI

(R^{F}SO₃)₂M(ERE'ₗ) (XI)

worin
- R^{F}: Perfluoralkyl oder Perfluoraryl ist,
- M: ein Metall aus der 13. Gruppe des Periodensystems der Elemente ist,
- E: Sauerstoff, Schwefel, Selen, NR¹ oder PR¹ ist, worin
R¹ H oder ein C₁-C₂₀-Kohlenwasserstoffrest wie Alkyl, Aryl ist, wobei R¹ mit R einen Ring bilden kann,
- R: eine C₁-C₃₀-Kohlenwasserstoffbrücke wie Alkylen-, Arylen- oder Aralkylenbrücke ist,
- E': H, ein C₁-C₂₀-Kohlenwasserstoffrest wie Alkyl, Aryl, OR², NR²R³, Halogen, SR², PR²R³ ist, worin
R² und R³ gleich oder verschieden H oder ein C₁-C₂₀-Kohlenwasserstoffrest wie Alkyl, Aryl, Aralkyl sind, wobei R² mit R³ oder R und/oder R³ mit R oder R² einen Ring bilden kann, und
- I: eine ganze Zahl von 0 bis 10 bedeutet.

Als gegebenenfalls substituiertes R^{F}SO₃ in Form von Perfluoralkyl- oder -arylsulfonsäuren seien genannt Trifluormethansulfonsäure, Pentafluorethansulfonsäure, Heptafluorpropansulfonsäure, Heptadecanfluoroktansulfonsäure, Tridecafluormethylcyclohexylsulfonsäure, 5-Trifluormethyl-dodecafluorhexansulfonsäure oder Pentafluorphenylsulfonsäure, bevorzugt Trifluormethansulfonsäure.

M ist wie oben definiert, bevorzugt Bor, Aluminium oder Gallium und besonders bevorzugt Aluminium.

Die Einheit ERE' ist wie oben definiert, bevorzugt Methanolat, Ethanolat, i-Propanolat, tert.-Butanolat, Cyclohexanolat, Benzylalkoholat, 2-Methoxyethanolat, 2-(2-Piperidyl)ethanolat, 2,2,2-Trifluorethanolat, 1,1,1,3,3,3-Hexafluorisopropanolat, 2-(Methylmercapto)ethanolat, 3-Dimethylphosphanyl-phenolat, 2-Dimethylamino-cyclohexanolat, Ethylthiolat, Benzylthiolat, 2-Methoxy-ethanthiolat, Methylselenat, N-Methylanilid, 6-Methoxy-2,3-dihydro-indolat, Phenolat, Quinolin-7-olat, 3-Methoxyphenolat, 3,5-Methoxyphenolat, 3-Methyl-4-Dimethylaminophenolat, 3-Dimethylaminophenolat, 2-Fluorphenolat, Pentafluorphenolat, 3-t-Butylphenolat, 2,6-Di-Tert-Butyl-4-methylphenolat, 3-Methylmereaptophenolat, 3,5-Trifluormethylphenolat, 3,5-Dimethoxyphenolat, 2-(2-Pyridyl)phenolat, 6-Methoxyindolat, 2'-Methoxybiphenyl-2-olat, 2'-Methoxy-1,1'-binaphthalenyl-2-olat oder 8-Methoxy-2-naphtholat, besonders bevorzugt 1,1,1,3,3,3-Hexafluorisopropanolat, Phenolat, 3-Methoxyphenolat, 3'5-Methoxyphenolat, 3-Methyl-4-Dimethylaminophenolat, 3-(N,N-Dimethylamino)phenolat, 3-Fluorphenolat, Pentafluorphenolat, 3-Methylmercaptophenolat, 3,5-Trifluormethylphenolat, 3,5-Dimethoxyphenolat oder 6-Methoxyindolat.

Im einzelnen seien beispielsweise Aluminium-bis(trifluormethansulfonat)-phenolat, Aluminium-bis(trifluormethansulfonat)-3-methyl-4-N,N-dimethylaminophenolat, Aluminium-bis(trifluormethansulfonat)-3-N,N-dimethylaminophenolat, Aluminiumbis(trifluormethansulfonat)-3-methoxyphenolat, Aluminium-bis(trifluormethansulfonat)-3-fluorphenolat, Aluminium-bis(trifluormethansulfonat)-3,5-difluorphenolat, Aluminium-bis(trifluormethansulfonat)-pentafluorphenolat, Aluminium-bis(trifluormethansulfonat)-6-methoxyindolat, Aluminium-bis(trifluormethansulfonat)-5-tertbutylphenolat, Aluminium-bis(trifluormethansulfonat)-3,5-di-tert.-butylphenolat, Aluminium-bis(trifluormethansulfonat)-3,5-dimethoxyphenolat, Aluminium-bis(trifluormethansulfonat)-3-mercaptophenolat, Aluminium-bis(trifluormethansulfonat)-3-methanolat, Aluminium-bis(trifluormethansulfonat)-3-ethanolat, Aluminiumbis(trifluormethansulfonat)-3-isopropanolat, Aluminium-bis(trifluormethansulfonat)-3-tert.-butylat, Aluminium-bis(trifluormethansulfonat)-3-benzylat, Aluminiumbis(trifluormethansulfonat)-3-cyclohexanolat oder Aluminium-bis(trifluormethansulfonat)-3-methoxycyclohexanolat genannt.

Es wurde weiterhin ein Verfahren zur Herstellung von neuen Bis(perfluoralkylsulfonsäure)-Verbindungen der 13. Gruppe des Periodensystems der Elemente der Formel XI gefunden, das dadurch gekennzeichnet ist, daß man Verbindungen der Formel XII

MY¹Y²Y³ (XII)

worin
- M: wie in Formel (XI) definiert ist und
- Y¹, Y² oderY³: gleich oder verschieden aus der Gruppe H, C₁-C₁₀-Kohlenwasserstoff wie Alkyl oder Aryl, Halogenid, Alkoxid, Aryloxid oder Amid gewählt werden in der ersten Stufe bei Temperaturen von -100°C bis 300°C in Gegenwart oder Abwesenheit inerter Lösungsmittel mit H(ERE'₁) umsetzt und anschließend in der zweiten Stufe bei Temperaturen von -100°C bis 300°C in Gegenwart oder Abwesenheit inerter Lösungsmittel mit R^{F}SO₃H umsetzt. Es ist dabei unerheblich, ob die Produkte der ersten Stufe isoliert werden oder nicht.

Ein weiteres Verfahren zur Herstellung der neuen Bis(perfluoralkylsulfonsäure)-Verbindungen der 13. Gruppe des Periodensystems der Elemente der Formel XI ist dadurch gekennzeichnet, daß man Verbindungen der Formel XIII

M(ERE'ₗ)₃ (XIII)

bei Temperaturen von -100°C bis 300°C in Gegenwart oder Abwesenheit inerter Lösungsmittel mit R^{F}SO₃H umsetzt, wobei M, E, R, E' und I die gleiche Bedeutung wie in Formel (XI) haben.

Als Verbindung der Formel XII werden in das erfindungsgemäße Verfahren bevorzugt beispielsweise Aluminiumtrichlorid, Aluminiumtribromid, Trimethylaluminium, Triethylaluminium, Triisobutylaluminium, Diethylaluminiumchlorid, Ethylaluminiumsesquichlorid, Aluminiumtriisopropoxid, Aluminiumtri-tert-butoxid oder Aluminiumtriphenolat eingesetzt.

Als Verbindungen der Formel XIII werden in das erfindungsgemäße Verfahren bevorzugt beispielsweise Aluminiumtriisopropoxid, Aluminiumtri-tert-butoxid oder Aluminiumtriphenolat eingesetzt.

Als bevorzugter Temperaturbereich sei genannt -100 bis 200°C und besonders bevorzugt -80 bis 150°C. Die Gesamtreaktionsdauer variiert je nach Ausgangsverbindungen zwischen wenigen Minuten und 48 Stunden. Gegebenenfalls kann unter erhöhtem oder reduziertem Druck gearbeitet werden.

Bevorzugt wird das erfindungsgemäße Verfahren in Gegenwart von Lösungsmitteln, bevorzugt beispielsweise Hexan, Heptan, Oktan, andere aliphatische Kohlenwasserstoffe, Cyclohexan, Methylcyclohexan, Benzol, Toluol, Xylol, Methylenchlorid, Dichlorethan, Trichlorethan, Chlorbenzol, Dichlorbenzol, Trichlorbenzol oder Gemische dieser in beliebigen Mischungsverhältnissen durchgeführt.

Die Menge des Lösungsmittels bzw. des Lösungsmittelgemisches kann beliebig variieren. Sie wird zweckmäßig so gewählt, daß die Reaktantenkonzentrationen beispielsweise zwischen 5 und 80 Gew.% liegen, bezogen auf den Gesamtansatz.

Mögliche Varianten bei der bevorzugten Ausführungsform des erfindungsgemäßen Verfahrens, nämlich der Umsetzung der Verbindung der Formel XII mit H(ERE'₁) und R^{F}SO₃H: Die Verbindung der Formel XII wird im Lösungsmittel bzw. Lösungsmittelgemisch gelöst oder suspendiert und auf die benötigte Reaktionstemperatur gebracht. H(ERE',) wird in Lösung oder als Reinsubstanz innerhalb geeigneter Zeitperioden zudosiert, so daß die Temperatur- und Gasentwicklung im geeigneten Bereich bleibt. Dann läßt man solange bei einer geeigneten Reaktionstemperatur weiterreagieren, bis keine Gasentwicklung mehr auftritt. Anschließend bringt man das Reaktionsgemisch auf die benötigte Temperatur und die Perfluoralkyl- oder -arylsulfonsäure wird in Lösung oder als Reinsubstanz innerhalb geeigneter Zeitperioden zudosiert, so daß die Temperatur- und Gasentwicklung im geeigneten Bereich bleibt. Dann läßt man solange bei einer geeigneten Reaktionstemperatur weiterreagieren, bis keine Gasentwicklung mehr auftritt.

Das Lösungsmittel kann destillativ aus dem Reaktionsgemisch entfernt werden oder in manchen Fällen kann das Produkt der Formel XI vorteilhafterweise abfiltriert oder abzentrifugiert werden.

Die erfindungsgemäß als Ausgangsprodukte eingesetzten Verbindungen stellen bekannte Produkte dar und sind zum Teil im Handel erhältlich.

Bedingt durch die Präparation können die erfindungsgemäßen Verbindungen unterschiedliche Mengen an Lösungsmittel enthalten.

Die erfindungsgemäßen Verbindungen sind geeignet als Katalysatoren für die Herstellung von Polyethern durch ringöffnende Polymerisation von cyclischen Ethem. Dabei versteht man untercyclischen Ethem beispielsweise Oxirane, Oxetane, Tetrahydrofurane, Oxepane, 1,3-Dioxolane oder 1,3,5 Trioxane.

Die erfindungsgemäßen Verfahren werden durch die nachfolgenden Beispiele näher erläutert.

### Beispiele

### Synthese der Aluminiumverbindungen

### A) Synthese von Aluminium-bis(trifluormethansulfonat)(phenolat)

Zu 5,00 ml einer 2,00 molaren Lösung von Trimethylaluminum (10,0 mmol) in Toluol wird bei -78°C eine Lösung aus 1,30 g (10,0 mmol) Phenol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Lösungsmittel wird im Vakuum entfernt und das Produkt im Hochvakuum getrocknet. Ausbeute: 4,18 g

### B) Synthese von Aluminium-bis(trifluormethansulfonat)(3,5-di-tert-butylphenolat)

Zu 5,00 ml einer 2,00 molaren Lösung von Trimethylaluminum (10,0 mmol) in Toluol wird bei -78°C eine Lösung aus 2,06 g (10,0 mmol) 3,5-Di-tert-butylphenol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Produkt wird abfiltriert, mit Methylenchlorid gewaschen und im Hochvakuum getrocknet. Ausbeute: 3,34 g

### C) Synthese von Aluminium-bis(trifluormethansulfonat)(3-dimethylaminophenolat)

Zu 5,00 ml einer 2,00 molaren Lösung von Trimethylaluminum (10,0 mmol) in Toluol wird bei -78°C eine Lösung aus 1,37 g (10,0 mmol) 3-Dimethylaminophenol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Lösungsmittel wird im Vakuum entfernt und das Produkt im Hochvakuum getrocknet. Ausbeute: 4,25 g

### D) Synthese von Aluminium-bis(trifluormethansulfonat)(3-methoxyphenolat)

Zu 1,37 ml (1,14 g; 10,0 mmol) Triethylaluminium in Methylenchlorid wird bei -78°C eine Lösung aus 1,24 g (10,0 mmol) 3-Methoxyphenol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Produkt wird abfiltriert, mit Methylenchlorid gewaschen und im Hochvakuum getrocknet. Ausbeute: 3,89 g

### E) Synthese von Aluminium-bis(trifluormethansulfonat)(3,5-dimethoxyphenolat)

Eine Suspension von 1,33 g (10,0 mmol) Aluminiumtrichlorid und 1,54 g (10,0 mmol) 3,5-Dimethoxyphenol in Toluol werden 2 h unter Rückfluß erhitzt, bis keine Gasentwicklung mehr zu beobachten ist. Das Reaktionsgemisch wird auf 0°C abgekühlt und tropfenweise mit 1,77 ml (= 3,00 g; 20,0 mmol) Trifluormethansulfonsäure versetzt und für 16 h gerührt. Das lösungsmittel wird im Vakuum entfernt und der Rückstand in Methylenchlorid aufgenommen, das Produkt anschließend durch Zugabe von Hexan ausgefällt, abfiltriert, mit Hexan gewaschen und im Hochvakuum getrocknet. Ausbeute: 4,68 g

### F) Synthese von Aluminium-bis(trifluormethansulfonat)(pentafluorphenolat)

Zu 10,0 ml einer 2,00 molaren Lösung von Trimethylaluminum (20,0 mmol) in Toluol wird bei -78°C eine Lösung aus 3,68 g (20,0 mmol) Pentafluorphenol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 3,54 ml (= 6,00 g; 40,0 mmol) Trifluormethansulfonsäure zu. Das Reaktionsgemisch wird dann langsam auf Raumtemperatur erwärmt und für 16 h gerührt. Das Produkt wird abfiltriert, mit Methylenchlorid gewaschen und im Hochvakuum getrocknet. Ausbeute: 8,71 g

### G) Synthese von Aluminium-bis(trifluormethansulfonat)(4-dimethylamino-3-methylphenolat)

Zu 1,50 g (10,0 mmol) 6-Dimethylamino-3-hydroxytoluol in Methylenchlorid wird bei -78°C eine Lösung aus 5,00 ml einer 2,00 molaren Lösung von Trimethylaluminum (10,0 mmol) in Toluol getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Lösungsmittel wird im Vakuum entfernt und das Produkt im Hochvakuum getrocknet. Ausbeute: 4,75 g

### H) Synthese von Aluminium-bis(trifluormethansulfonat)(hexafluorisopropanolat)

Zu 5,00 ml einer 2,00 molaren Lösung von Trimethylaluminum (10,0 mmol) in Toluol wird bei -78°C eine Lösung aus 1,05 ml (= 1,68 g; 10,0 mmol) Hexafluorisopropanol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Produkt wird abfiltriert, mit Methylenchlorid gewaschen und im Hochvakuum getrocknet. Ausbeute: 4,27 g

### I) Synthese von Aluminiumbis(trifluormethansulfonat)-(3,3-Dioxobenz-1,3-oxathiol-5-olat)

Zu 5,00 ml einer 2,00 molaren Lösung von Trimethylaluminum (10,0 mmol) in Toluol wird bei -78°C eine Lösung aus 1,86 g (10,0 mmol) 3,3-Dioxobenz-1,3-oxathiol-5-ol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Produkt wird abfiltriert, mit Methylenchlorid gewaschen und im Hochvakuum getrocknet. Ausbeute: 5,33 g

### J) Synthese von Aluminium-bis(trifluormethansulfonat)(3-methylmercaptophenolat)

Zu 0,97 ml (0,81 g; 7,1 mmol) Triethylaluminium in Methylenchlorid wird bei -78°C eine Lösung aus 2,00 g (7,1 mmol) 3-Methylmercaptophenol in Methylenchlorid getropft. Das Reaktionsgemisch wird auf 0°C erwärmt und für ca. 30 Minuten gerührt, bis keine Gasentwicklung mehr feststellbar ist. Anschließend kühlt man erneut auf-78°C und gibt tropfenweise 1,26 ml (= 2,13 g; 14,2 mmol) Trifluormethansulfonsäure zu. Das Reaktionsgemisch wird dann langsam auf Raumtemperatur erwärmt und für 16 h gerührt. Das Produkt wird abfiltriert, mit Methylenchlorid gewaschen und im Hochvakuum getrocknet. Ausbeute: 3,07 g

### K) Synthese von Aluminium-bis(trifluormethansulfonat)(t-butanolat)

Zu 5,00 ml einer 2,00 molaren Lösung von Trimethylaluminum (10,0 mmol) in Toluol wird bei -78°C eine Lösung aus 0,96 ml (= 0,74 g; 10,0 mmol) t-Butanol in Toluol getropft. Das Reaktionsgemisch wird auf 0°C erwärmt und für ca. 30 Minuten gerührt, bis keine Gasentwicklung mehr feststellbar ist. Anschließend kühlt man erneut auf -78°C und gibt tropfenweise 1,77 ml (= 3,00 g; 20,0 mmol) Trifluormethansulfonsäure zu. Das Reaktionsgemisch wird dann langsam auf Raumtemperatur erwärmt und für 16 h gerührt. Das Lösungsmittel wird im Vakuum entfernt und das Produkt im Hochvakuum getrocknet. Ausbeute: 3,97 g

### Beispiel 1

In einem 500 ml Druckglasautoklaven wurden 87,7 g Trimethylolpropan und 8 mg Aluminium-bis(trifluormethansulfonat)(phenolat) unter Schutzgas (Argon, leichter Überdruck (0,2 bar)) vorgelegt und unter Rühren auf 130°C aufgeheizt. Anschließend wurden 112,3 g Propylenoxid mittels einer temperatur- und druckgeregelten Membranpumpe bei einer Temperatur von 130°C und einem konstanten Druck von 2,5 bar (absolut) kontinuierlich zudosiert. Die Reaktionsdauer betrug 29 Minuten. Nach vollständiger Propylenoxid-Dosierung und 2 Stunden Nachreaktionszeit bei 130°C wurden flüchtige Anteile bei 90 °C (1 mbar) 30 min abdestilliert und anschließend auf Raumtemperatur abgekühlt.

| | | |
|---|---|---|
| Polyetherpolyol | Farbe | farblos, klar |
| | OH-Zahl (mg KOH/g) | 531 |
| | Viskosität (mPas bei 25°C) | 1351 |

### Beispiel 2

Beispiel 1 wurde wiederholt, es wurden jedoch 8 mg Aluminiumbis(trifluormethansulfonat)-(3,5-di-tert-butylphenolat) eingesetzt.

| | | |
|---|---|---|
| Reaktionsdauer | 27 Minuten | |
| Polyetherpolyol | Farbe: | farblos, klar |
| | OH-Zahl (mg KOH/g): | 526 |
| | Viskosität (mPas bei 25°C): | 1308 |

### Beispiel 3

Beispiel 1 wurde wiederholt, es wurden jedoch 8 mg Aluminiumbis(trifluormethansulfonat)-(3-methoxyphenolat) eingesetzt.

| | | |
|---|---|---|
| Reaktionsdauer | 32 Minuten | |
| Polyetherpolyol | Farbe: | farblos, klar |
| | OH-Zahl (mg KOH/g): | 535 |
| | Viskosität (mPas bei 25°C): | 1314 |

### Beispiel 4

Beispiel 1 wurde wiederholt, es wurden jedoch 8 mg Aluminiumbis(trifluormethansulfonat)-(3,5-dimethoxyphenolat) eingesetzt.

| | | |
|---|---|---|
| Reaktionsdauer | 26 Minuten | |
| Polyetherpolyol | Farbe: | farblos, klar |
| | OH-Zahl (mg KOH/g): | 525 |
| | Viskosität (mPas bei 25°C): | 1311 |

### Beispiel 5

Beispiel 1 wurde wiederholt, es wurden jedoch 8 mg Aluminiumbis(trifluormethansulfonat)-(3-methylmercaptophenolat) eingesetzt.

| | | |
|---|---|---|
| Reaktionsdauer | 44 Minuten | |
| Polyetherpolyol | Farbe: | farblos, klar |
| | OH-Zahl (mg KOH/g): | 535 |
| | Viskosität (mPas bei 25°C): | 1353 |

### Beispiel 6

Beispiel 1 wurde wiederholt, es wurden jedoch 8 mg Aluminiumbis(trifluormethansulfonat)-(pentafluorphenolat) eingesetzt.

| | | |
|---|---|---|
| Reaktionsdauer | 24 Minuten | |
| Polyetherpolyol | Farbe: | farblos, klar |
| | OH-Zahl (mg KOH/g): | 531 |
| | Viskosität (mPas bei 25°C): | 1330 |

### Beispiel 7

Beispiel 1 wurde wiederholt, es wurden jedoch 8 mg Aluminiumbis(trifluormethansulfonat)-(3,3-dioxobenz-1,3-oxathiol-5-olat) eingesetzt.

| | | |
|---|---|---|
| Reaktionsdauer | 24 Minuten | |
| Polyetherpolyol | Farbe: | farblos, klar |
| | OH-Zahl (mg KOH/g): | 533 |
| | Viskosität (mPas bei 25°C): | 1343 |

## Patentansprüche

1. Verbindungen der Formel (XI)
(R^{F}SO₃)₂M(ERE'ₗ) (XI)
worin
R^{F} Perfluoralkyl oder Perfluoraryl ist,
M ein Metall aus der 13. Gruppe des Periodensystems der Elemente ist,
E Sauerstoff, Schwefel, Selen, NR¹ oder PR¹ ist worin
R¹ H oder ein C₁-C₂₀-Kohlenwasserstoffrest wie Alkyl, Aryl ist, wobei R¹ mit R einen Ring bilden kann,
R eine C₁-C₃₀-Kohlenwasserstoffbrücke wie Alkylen-, Arylen- oder Aralkylenbrücke ist,
E' H, ein C₁-C₂₀-Kohlenwasserstoffrest wie Alkyl, Aryl, OR², NR²R³, Halogen, SR², PR²R³ ist, worin
R² und R³ gleich oder verschieden H oder ein C₁-C₂₀-Kohlenwasser- stoffrest wie Alkyl, Aryl, Aralkyl sind, wobei R² mit R³ oder R und/oder R³ mit R oder R² einen Ring bilden kann, und
l eine ganze Zahl von 0 bis 10 bedeutet.

2. Verfahren zur Herstellung einer Verbindung der Formel (XI) gemäß Anspruch 1, worin man eine Verbindung der Formel (XII)
MY¹Y²Y³ (XII)
worin
M ein Metall aus der 13. Gruppe des Periodensystems der Elemente ist,
Y¹, Y² oderY³ gleich oder verschieden aus der Gruppe H, C₁-C₁₀-Kohlenwasserstoff wie Alkyl oder Aryl, Halogenid, Alkoxid, Aryloxid oder Amid gewählt werden
in der ersten Stufe bei Temperaturen von -100°C bis 300°C in Gegenwart oder Abwesenheit inerter Lösungsmittel mit H(ERE'ₗ) umsetzt, wobei
E Sauerstoff, Schwefel, Selen, NR¹ oder PR¹ ist, worin
R¹ H oder ein C₁-C₂₀-Kohlenwasserstoffrest wie Alkyl, Aryl ist, wobei R¹ mit R einen Ring bilden kann,
R eine C₁-C₃₀-Kohlenwasserstoffbrücke wie Alkylen-, Arylen- oder Aralkylenbrücke ist,
E' H, ein C₁-C₂₀-Kohlenwasserstoffrest wie Alkyl, Aryl, OR², NR²R³, Halogen, SR², PR²R³ ist, worin
R² und R³ gleich oder verschieden H oder ein C₁-C₂₀-Kohlenwasser-stoffrest wie Alkyl, Aryl, Aralkyl sind, wobei R² mit R³ oder R und/oder R³ mit R oder R² einen Ring bilden kann, und
l eine ganze Zahl von 0 bis 10 bedeutet,
und anschließend in der zweiten Stufe bei Temperaturen von -100°C bis 300°C in Gegenwart oder Abwesenheit inerter Lösungsmittel mit R^{F}SO₃H umsetzt,
wobei
R^{F} Perfluoralkyl oder Perfluoraryl ist.

3. Verfahren zur Herstellung einer Verbindung der Formel (XI) gemäß Anspruch 1, worin man eine Verbindung der Formel (XIII)
M(ERE'ₗ)₃ (XIII)
bei Temperaturen von -100°C bis 300°C in Gegenwart oder Abwesenheit inerter Lösungsmittel mit R^{F}SO₃H umsetzt, wobei
M ein Metall aus der 13. Gruppe des Periodensystems der Elemente ist,
E Sauerstoff, Schwefel, Selen, NR¹ oder PR¹ ist, worin
R¹ H oder ein C₁-C₂₀-Kohlenwasserstoffrest wie Alkyl, Aryl ist, wobei R¹ mit R einen Ring bilden kann,
R eine C₁-C₃₀-Kohlenwasserstoffbrücke wie Alkylen-, Arylen- oder Aralkylenbrücke ist,
E' H, ein C₁-C₂₀-Kohlenwasserstoffrest wie Alkyl, Aryl, OR², NR²R³, Halogen, SR², PR²R³ ist, worin
R² und R³ gleich oder verschieden H oder ein C₁-C₂₀-Kohlenwasser-stoffrest wie Alkyl, Aryl, Aralkyl sind, wobei R² mit R³ oder R und/oder R³ mit R oder R² einen Ring bilden kann, und
l eine ganze Zahl von 0 bis 10 bedeutet.

4. Verfahren zur ringöffnenden Polymerisation von cyclischen Ethern in Gegenwart von Verbindungen der Formel (XI).

## Claims

1. Compounds corresponding to the formula (XI)
(R^{F}SO₃)₂M(ERE'ₗ) (XI)
in which
R^{F} is perfluoroalkyl or perfluoroaryl,
M is a metal from Group 13 of the Periodic Table of the Elements,
E is oxygen, sulfur, selenium, NR¹ or PR¹, in which
R¹ is H or a C₁-C₂₀-hydrocarbon radical such as alkyl, aryl, wherein R¹ can form a ring with R,
R is a C₁-C₃₀-hydrocarbon bridge such as an alkylene, arylene or aralkylene bridge,
E' is H, a C₁-C₂₀ hydrocarbon radical such as alkyl, aryl, OR², NR²R³, halogen, SR², PR²R³, in which
R² and R³ are the same or different and are H or a C₁-C₂₀-hydrocarbon radical such as alkyl, aryl, aralkyl, wherein R² can form a ring with R³ or R and/or R³ can form a ring with R or R², and
l denotes an integer from 0 to 10.

2. Process for the preparation of a compound corresponding to the formula (XI) according to claim 1, in which a compound corresponding to the formula (XII)
MY¹Y²Y³ (XII)
in which
M is a metal from Group 13 of the Periodic Table of the Elements,
Y¹,Y² or Y³ are the same or different and are selected from the group comprising H, C₁-C₁₀-hydrocarbon such as alkyl or aryl, halide, alkoxide, aryl oxide or amide,
is in the first step reacted with H(ERE'ₗ) at temperatures of from -100°C to 300°C in the presence or absence of inert solvents, wherein
E is oxygen, sulfur, selenium, NR¹ or PR¹, in which
R¹ is H or a C₁-C₂₀-hydrocarbon radical such as alkyl, aryl, wherein R¹ can form a ring with R,
R is a C₁-C₃₀-hydrocarbon bridge such as an alkylene, arylene or aralkylene bridge,
E' is H, a C₁-C₂₀-hydrocarbon radical such as alkyl, aryl, OR², NR²R³, halogen, SR², PR²R³, in which
R² and R³ are the same or different and are H or a C₁-C₂₀-hydrocarbon radical such as alkyl, aryl, aralkyl, wherein R² can form a ring with R³ or R and/or R³ can form a ring with R or R², and
l denotes an integer from 0 to 10,
and is then in the second step reacted with R^{F}SO₃H at temperatures of from -100°C to 300°C in the presence or absence of inert solvents,
wherein
R^{F} is perfluoroalkyl or perfluoroaryl.

3. Process for the preparation of a compound corresponding to the formula (XI) according to claim 1, in which a compound corresponding to the formula (XIII)
M(ERE'ₗ)₃ (XIII)
is reacted with R^{F}SO₃H at temperatures of from -100°C to 300°C in the presence or absence of inert solvents, wherein
M is a metal from Group 13 of the Periodic Table of the Elements,
E is oxygen, sulfur, selenium, NR¹ or PR¹, in which
R¹ is H or a C₁-C₂₀-hydrocarbon radical such as alkyl, aryl, wherein R¹ can form a ring with R,
R is a C₁-C₃₀-hydrocarbon bridge such as an alkylene, arylene or aralkylene bridge,
E' is H, a C₁-C₂₀ hydrocarbon radical such as alkyl, aryl, OR², NR²R³, halogen, SR², PR²R³, in which
R² and R³ are the same or different and are H or a C₁-C₂₀-hydrocarbon radical such as alkyl, aryl, aralkyl, wherein R² can form a ring with R³ or R and/or R³ can form a ring with R or R², and
l denotes an integer from 0 to 10.

4. Process for the ring-opening polymerisation of cyclic ethers in the presence of compounds corresponding to the formula (XI).

## Revendications

1. Composés de la formule (XI) :
(R^{F}SO₃)₂M(ERE'ₗ) (XI)
où
R^{F} est un radical perfluoroalcoyle ou perfluoroaryle,
M est un métal du groupe 13 du système périodique des éléments,
E est l'atome d'oxygène, de soufre, de sélénium, un radical NR¹ ou PR¹, où
R¹ est l'atome H ou un reste hydrocarbure en C₁-C₂₀ comme un radical alcoyle, aryle, où R¹ peut former un cycle avec R,
R est un pont hydrocarbure en C₁-C₃₀ comme un radical alcoylène, arylène ou aralcoylène,
E' est l'atome H, un reste hydrocarbure en C₁-C₂₀ comme un radical alcoyle, aryle, un radical OR², NR²R³, un atome d'halogène, un radical SR², PR²R³, où
R² et R³ sont identiques ou différents et sont l'atome H ou un reste hydrocarbure en C₁-C₂₀ comme un radical alcoyle, aryle, aralcoyle, où R² peut former un cycle avec R³ ou R et/ou R³ avec R ou R², et
l représente un nombre entier allant de 0 à 10.

2. Procédé de préparation d'un composé de la formule (XI) suivant la revendication 1, où on fait réagir un composé de la formule (XII) :
MY¹Y²Y³ (XII)
où
M est un métal du groupe 13 du système périodique des éléments,
Y¹, Y² ou Y³ sont choisis, identiques ou différents, parmi le groupe consistant en l'atome H, un reste hydrocarbure en C₁-C₁₀ comme un radical alcoyle ou aryle, un radical halogénure, alcoxyde, aryloxyde ou amide,
dans une première étape à des températures allant de -100°C à 300°C en présence ou en l'absence d'un solvant inerte, avec H(ERE'ₗ), où
E est l'atome d'oxygène, de soufre, de sélénium, un radical NR¹ ou PR¹, où
R¹ est l'atome H ou un reste hydrocarbure en C₁-C₂₀ comme un radical alcoyle, aryle, où R¹ peut former un cycle avec R,
R est un pont hydrocarbure en C₁-C₃₀ comme un radical alcoylène, arylène ou aralcoylène,
E' est l'atome H, un reste hydrocarbure en C₁-C₂₀ comme un radical alcoyle, aryle, un radical OR², NR²R³, un atome d'halogène, un radical SR², PR²R³, où
R² et R³ sont identiques ou différents et sont l'atome H ou un reste hydrocarbure en C₁-C₂₀ comme un radical alcoyle, aryle, aralcoyle, où R² peut former un cycle avec R³ ou R et/ou R³ avec R ou R², et
l représente un nombre entier allant de 0 à 10,
et ensuite, dans une deuxième étape à des températures allant de -100°C à 300°C en présence ou en l'absence d'un solvant inerte, avec R^{F}SO₃H, où
R^{F} est un radical perfluoroalcoyle ou perfluoroaryle.

3. Procédé de préparation d'un composé de la formule (XI) suivant la revendication 1, où on fait réagir un composé de la formule (XIII) :
M(ERE'ₗ)₃ (XIII)
à des températures allant de -100°C à 300°C en présence ou en l'absence d'un solvant inerte avec R^{F}SO₃H, où
M est un métal du groupe 13 du système périodique des éléments,
E est l'atome d'oxygène, de soufre, de sélénium, un radical NR¹ ou PR¹, où
R¹ est l'atome H ou un reste hydrocarbure en C₁-C₂₀ comme un radical alcoyle, aryle, où R¹ peut former un cycle avec R,
R est un pont hydrocarbure en C₁-C₃₀ comme un radical alcoylène, arylène ou aralcoylène,
E' est l'atome H, un reste hydrocarbure en C₁-C₂₀ comme un radical alcoyle, aryle, un radical OR², NR²R³, un atome d'halogène, un radical SR², PR²R³, où
R² et R³ sont identiques ou différents et sont l'atome H ou un reste hydrocarbure en C₁-C₂₀ comme un radical alcoyle, aryle, aralcoyle, où R² peut former un cycle avec R³ ou R et/ou R³ avec R ou R², et
l représente un nombre entier allant de 0 à 10.

4. Procédé pour la polymérisation par ouverture de cycle d'éthers cycliques, en présence de composés de la formule (XI).
